Europäisches Patentamt

European Patent Office

Office européen des brevets

(11) Publication number:

**0 062 712**
**B1**

## (12) EUROPEAN PATENT SPECIFICATION

(45) Date of publication of patent specification: **16.01.85**

(21) Application number: **81301557.5**

(22) Date of filing: **09.04.81**

(51) Int. Cl.⁴: **F 16 C 33/08,** F 16 C 25/06 //
B62D1/16

(54) Improved shaft bearing bush and bearing assembly.

(43) Date of publication of application:
**20.10.82 Bulletin 82/42**

(45) Publication of the grant of the patent:
**16.01.85 Bulletin 85/03**

(84) Designated Contracting States:
**AT DE FR GB IT SE**

(56) References cited:
**CH-A- 485 545**
**FR-A- 913 786**
**FR-A-2 221 643**
**GB-A- 726 544**
**US-A-1 515 087**
**US-A-3 866 510**

(73) Proprietor: **DEERE & COMPANY**
**1 John Deere Road**
**Moline Illinois 61265 (US)**

(72) Inventor: **Becker, Manfred**
**Schwingstrasse 36**
**D-6800 Mannheim (DE)**

(74) Representative: **Pears, David Ashley et al**
**REDDIE & GROSE 16 Theobalds Road**
**London WC1X 8PL (GB)**

Courier Press, Leamington Spa, England.

## Description

The present invention relates to a shaft bearing bush for fitting in a cylindrical bore. The object of the invention is to provide a bush which is cheap and simple to instal without special machining of the cylindrical bore or the use of additional elements like circlips. The invention is more particularly concerned with the problem of axially positioning the bush accurately for the purpose of establishing the correct preload on a thrust bearing.

It is known to provide a press-fitted bearing bush with splines having leading ends with cutting teeth and circumferentially extending clip receiving grooves (GB—A—726544), it is not easy precisely to adjust the axial position of such a bush in order for example accurately to establish the desired clearance for a thrust bearing.

The invention provides a shaft bearing bush as defined in claim 1 below and a bearing assembly including such a bush and as defined in claim 3 below.

Screw threaded insert bushes are known with self tapping external threads as well as conventional internal threads (e.g. US—A—3866510) but such bushes are for purposes entirely unrelated to the problem underlying the present invention. In particular such bushes have a threaded bore because they are used, especially in soft metal, to provide a threaded hole receiving a stud or a sparking plug, for example. These known bushes can be slotted or otherwise formed to facilitate their thread cutting action. These known measures can naturally equally well be applied to the bearing bush according to the present invention.

The invention will be described in more detail by way of example with reference to the accompanying drawings in which:

Fig. 1 is a longitudinal cross section of an installed bearing bush embodying the invention,

Fig. 2a is an elevation of the bush, half in section,

Fig. 2b is a corresponding end view, and

Fig. 3 is a transverse cross section through a modified bush.

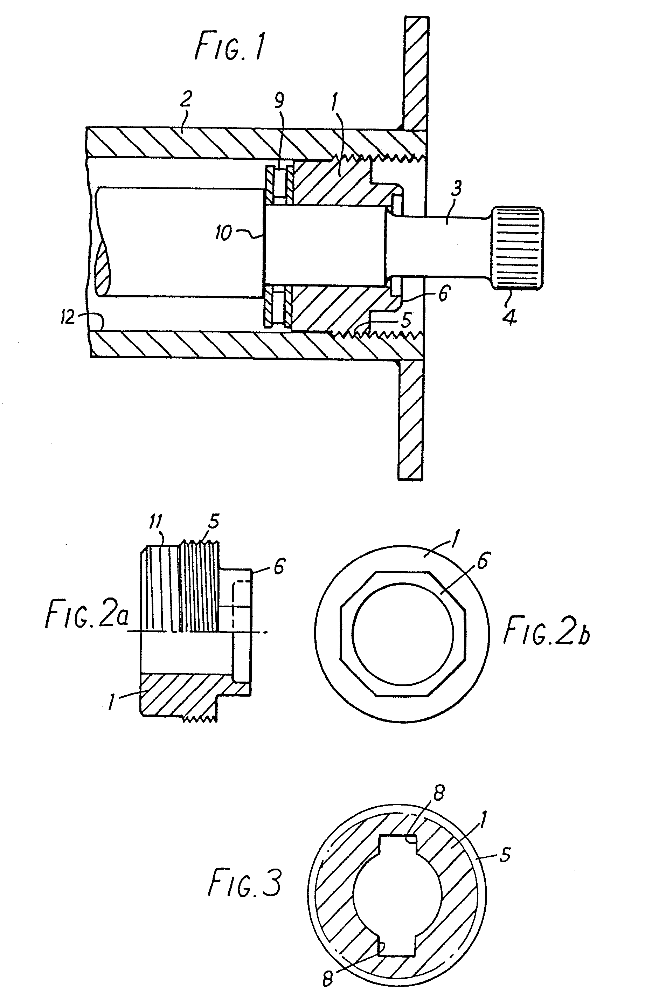

Referring to Fig. 1 a bush 1 is installed in a steering column tube for a motor vehicle and journals one end of a steering shaft 3 having a splined head 4 for attachment to the steering metering pump. The bush has a self tapping external thread 5 (Fig. 2a) by means of which the bush is screwed into the tube 2 without any special measures in relation to the tube itself. As shown in Fig. 2a and 2b, the bush may have an integral collar 6 with a hexagonal profile for fitting a wrench by means of which the bush is screwed into the tube 2. Many other possibilities exist for positive engagement with a driving tool. For example Fig. 3 shows the internal bore 7 provided with key slots 8 in which a driving blade can be engaged.

Considerable torque is required to screw the bush into the tube and high frictional forces are created which are sufficient to keep the bush 1 firmly located. Accordingly, the axial position of the bush can be adjusted and maintained exactly and this enables a thrust bearing 9 located between the bush itself and a shoulder 10 on the shaft to be preloaded to the required degree.

In order to facilitate the screwing in of the bush and ensure true alignment (with the bush axis coincident with the tube axis), the bush has a lead-in portion 11 where the self tapping threads have been skimmed off as can be seen in Fig. 2a. This portion is a push fit in the bore 12 of the tube 2 so that, by the time that the threads 5 start to bite, the alignment of the bush will have been fixed. The fact that the lead-in portion has skimmed-off threads has no significance other than that it is cheaper to thread the whole bush and then skim off than to make a bush with a smooth leading portion and a threaded trailing portion.

## Claims

1. A shaft bearing bush for fitting in a cylindrical bore and having a smooth internal bore for journalling a shaft, characterised by a self tapping external thread (5) and a profiled part (6 or 8) for positive engagement by a driving tool for screwing the bush (1) into the cylindrical bore (12).

2. A shaft bearing bush according to claim 1, characterised by a lead-in portion (11) lacking the self tapping thread (5) for initial alignment of the bush in the cylindrical bore (12).

3. A bearing assembly comprising a part with a cylindrical bore, a bush according to claim 1 or 2 screwed into the bore and a shaft journalled in the bush, characterised by a thrust bearing (9) between the bush (1) and a bearing surface (10) of the shaft (3), the thrust bearing being preloaded by screwing in the bush (1) to establish a predetermined degree of preloading.

## Revendications

1. Coussinet de palier pour arbre destiné à être engagé dans un alésage cylindrique et présentant un alésage intérieur lisse pour tourillonner un arbre, caractérisé par un filetage extérieur auto-taraudeur (5) et par une partie profilée (6 ou 8) destinée à l'engagement positif d'un outil d'entraînement pour visser le coussinet (1) dans l'alésage cylindrique (12).

2. Coussinet de palier pour arbre suivant la revendication 1, caractérisé par une partie d'insertion pilote (11) ne comportant pas de filetage auto-taraudeur (5) pour l'alignement initial du coussinet dans l'alésage cylindrique (12).

3. Palier comportant une partie munie d'un alésage cylindrique, un coussinet suivant la revendication 1 ou 2 vissé dans l'alésage et un arbre tourillonné dans le coussinet, caractérisé par une butée axiale (9) prévue entre le coussinet (1) et une surface de portée (10) de l'arbre (3), la butée axiale étant pré-chargée par vissage du coussinet (1) dans l'alésage, afin d'établir un degré prédéterminé de charge préalable.

## Patentansprüche

1. Wellenlagerbuchse zum Einpassen in eine zylindrische Bohrung mit einer glatten inneren Bohrung zum Lagern einer Welle, gekennzeichnet durch ein selbstschneidendes äußeres Gewinde (5) und einen profilierten Teil (6 oder 8) für den positiven Eingriff eines treibenden Werkzeuges zum Einschrauben der Buchse (1) in die zylindrische Bohrung (12).

2. Wellenlagerbuchse nach Anspruch 1, gekennzeichnet durch einen Einführungsabschnitt (11), der frei von dem selbstschneidenden Gewinde (5) ist, für die anfängliche Ausrichtung der Buchse in der zylindrischen Bohrung (12).

3. Lageranordnung mit einem Teil mit einer zylindrischer Bohrung, einer Buchse nach Anspruch 1 oder 2, die in die Bohrung eingeschraubt ist, und einer in der Buchse gelagerten Welle, gekennzeichnet, durch ein Drucklager (9) zwischen der Buchse (1) und einer Lagerfläche (10) der Welle (3), wobei das Drucklager durch Einschrauben der Buchse (1) um einen vorbestimmten Grad an Vorspannung einzustellen, vorbelastet wird.

**0 062 712**

*FIG.1*

*FIG.2a*

*FIG.2b*

*FIG.3*